(19) Europäisches Patentamt
European Patent Office
Office européen des brevets

(11) **EP 1 030 558 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **99945993.6**

(22) Anmeldetag: **18.08.1999**

(51) Int Cl.[7]: **A01N 47/12**
// A01N47:12, A01N43:80

(86) Internationale Anmeldenummer:
**PCT/EP99/06056**

(87) Internationale Veröffentlichungsnummer:
**WO 00/010393 (02.03.2000 Gazette 2000/09)**

(54) **SYNERGISTISCHE BIOZIDZUSAMMENSETZUNG**

SYNERGISTIC BIOCIDE COMPOSITION

COMPOSITION BIOCIDE SYNERGIQUE

(84) Benannte Vertragsstaaten:
**AT BE CH CY DE DK ES FI FR GB GR IE IT LI LU MC NL PT SE**

(30) Priorität: **20.08.1998 EP 98115723**

(43) Veröffentlichungstag der Anmeldung:
**30.08.2000 Patentblatt 2000/35**

(73) Patentinhaber: **THOR GmbH**
**67346 Speyer (DE)**

(72) Erfinder:
• **ANTONI-ZIMMERMANN, Dagmar**
**D-67346 Speyer (DE)**

• **BAUM, Rüdiger**
**D-68753 Waghäusel (DE)**
• **WUNDER, Thomas**
**D-67435 Neustadt/Weinstrasse (DE)**
• **SCHMIDT, Hans-Jürgen**
**D-67346 Speyer (DE)**

(74) Vertreter: **Hiltl, Elmar, Dr. et al**
**DIEHL.GLAESER.HILTL & PARTNER,**
**Patentanwälte,**
**Augustenstrasse 46**
**80333 München (DE)**

(56) Entgegenhaltungen:
**US-A- 5 190 944**

**Beschreibung**

Die Erfindung betrifft eine Biozidzusammensetzung als Zusatz zu Stoffen, die von schädlichen Mikroorganismen befallen werden können. Insbesondere richtet sich die Erfindung auf eine Biozidzusammensetzung mit einem Gehalt an 2-Methylisothiazolin-3-on als biozidem Wirkstoff.

Biozide Mittel werden in vielen Bereichen eingesetzt, beispielsweise zur Bekämpfung von schädlichen Bakterien, Pilzen oder Algen. Es ist seit langem bekannt, in solchen Zusammensetzungen 4-Isothiazolin-3-one (die auch als 3-Isothiazolone bezeichnet werden) einzusetzen, da sich unter diesen sehr wirksame biozide Verbindungen befinden.

Eine dieser Verbindungen ist 5-Chlor-2-methylisothiazolin-3-on. Sie weist zwar eine gute biozide Wirkung auf, hat aber bei ihrer praktischen Handhabung verschiedene Nachteile. Beispielsweise löst die Verbindung bei Personen, die damit umgehen, häufig Allergien aus. Auch bestehen in manchen Ländern gesetzliche Beschränkungen für den AOX-Wert, d. h. es darf im Wasser eine bestimmte Konzentration von an Aktivkohle adsorbierbaren organischen Chlor-, Brom- und Iodverbindungen nicht überschritten werden. Dies verhindert dann den Einsatz von 5-Chlor-2-methylisothiazolin-3-on im gewünschten. Umfang. Ferner ist die Stabilität dieser Verbindung unter bestimmten Bedingungen, z.B. bei hohen pH-Werten oder in Anwesenheit von Nucleophilen oder Reduktionsmitteln, nicht ausreichend.

Ein weiteres bekanntes Isothiazolin-3-on mit biozider Wirkung ist 2-Methylisothiazolin-3-on. Die Verbindung vermeidet zwar verschiedene Nachteile von 5-Chlor-2-methylisothiazolin-3-on, beispielsweise das hohe Allergierisiko, hat aber eine wesentlich geringere biozide Wirkung. Ein einfacher Austausch von 5-Chlor-2-methylisothiazolin-3-on durch 2-Methylisothiazolin-3-on ist daher nicht möglich.

Es ist auch schon bekannt, eine Kombination aus verschiedenen Isothiazolin-3-onen zu benutzen. Beispielsweise ist in der EP 0676140 A1 eine synergistische biozide Zusammensetzung beschrieben, die 2-Methylisothiazolin-3-on (2-Methyl-3-isothiazolon) und 2-n-Octylisothiazolin-3-on (2-n-Octyl-3-isothiazolon) enthält.

In der JP 01224306 (Chemical Abstracts, Band 112, Nr. 11, 12. März 1990, Referat Nr. 93924) ist eine Biozidzusammensetzung angegeben, die aus 2-Methylisothiazolin-3-on, 1,2-Benzisothiazolin-3-on und 5-Chlor-2-methylisothiazolin-3-on besteht.

Aus der US 5328926 sind synergistische Biozidzusammensetzungen bekannt, die Kombinationen aus 1,2-Benzisothiazolin-3-on und einer Iodpropargylverbindung (Iodpropinylverbindung) sind. Als eine solche Verbindung ist beispielsweise 3-Iodpropargyl-N-butylcarbamat genannt.

US 5190944 beschreibt eine synergistische mikrobizidische Zusammensetzung, die 5-Chlor-2-methyl-4-isothiazolin-3-on, 2-Methyl-4-isothiazolin-3-on, und 3-Iod-2-propinylbutylcarbamat enthält.

Der Erfindung liegt die Aufgabe zugrunde, eine Biozidzusammensetzung anzugeben, die dadurch verbessert ist, daß ihre Komponenten synergistisch zusammenwirken und deshalb beim gleichzeitigen Einsatz in geringeren Konzentrationen verwendet werden können, verglichen mit den nötigen Konzentrationen im Falle der Einzelkomponenten. So sollen der Mensch und die Umwelt weniger belastet sowie die Kosten der Bekämpfung schädlicher Mikroorganismen gesenkt werden.

Diese Aufgabe löst die Erfindung durch eine Biozidzusammensetzung mit einem Gehalt an 2-Methylisothiazolin-3-on als biozidem Wirkstoff, die dadurch gekennzeichnet ist, daß sie als einen weiteren bioziden Wirkstoff 3-Iod-2-propinyl-N-butylcarbamat enthält, wobei Biozidzusammensetzungen mit einem Gehalt an 5-Chlor-2-methylisothiazolin-3-on ausgenommen sind.

Die erfindungsgemäße Biozidzusammensetzung hat den Vorteil, daß sie bisher in der Praxis benutzte, aber mit Nachteilen bezüglich Gesundheit und Umwelt behaftete Wirkstoffe, z. B. das 5-Chlor-2-methylisothiazolin-3-on, ersetzen kann.

Ferner können die erfindungsgemäßen Biozidzusammensetzungen bei Bedarf nur mit Wasser als flüssigem Medium hergestellt werden. Dabei ist der Zusatz von Emulgatoren, organischen Lösungsmitteln und/oder Stabilisatoren nicht nötig.

Die erfindungsgemäße Biozidzusammensetzung enthält das 2-Methylisothiazolin-3-on und das 3-Iod-2-propinyl-N-butylcarbamat normalerweise im Gewichtsverhältnis von (100-1):(1-50), vorzugsweise im Gewichtsverhältnis von (15-1) : (1-8), insbesondere im Gewichtsverhältnis von (4-1):(1-4).

In der Biozidzusammensetzung liegen das 2-Methylisothiazolin-3-on und das 3-Iod-2-propinyl-N-butylcarbamat in einer Gesamtkonzentration von vorzugsweise 0,5 bis 50 Gew%, insbesondere von 1 bis 20 Gew%, besonders bevorzugt von 2,5 bis 10 Gew%, jeweils bezogen auf die gesamte Biozidzusammensetzung, vor.

Es ist zweckmäßig, die Biozide der erfindungsgemäßen Zusammensetzung in Kombination mit einem polaren oder unpolaren flüssigen Medium einzusetzen. Dabei kann dieses Medium beispielsweise in der Biozidzusammensetzung und/oder in dem zu konservierenden Stoff vorgegeben sein.

Bevorzugte polare flüssige Medien sind Wasser, ein aliphatischer Alkohol mit 1 bis 4 Kohlenstoffatomen, z. B. Ethanol und Isopropanol, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z.B. Butyldiglykolacetat, 2,2,4-Trimethylpentandiolmonoisobutyrat, ein Polyethylenglykol, ein Polypropylenglykol, N,N-Dimethylformamid oder ein Gemisch aus solchen Stoffen. Das polare flüssige Medium ist insbesondere Wasser, wobei die entsprechende Biozidzusammensetzung in ihrem pH-Wert vorzugsweise neutral, z.B. auf einen pH-Wert von 6 bis 8, eingestellt ist.

Als unpolare flüssige Medien dienen z. B. Aromaten, vorzugsweise Xylol und Toluol.

Die erfindungsgemäße Biozidzusammensetzung kann auch gleichzeitig mit einem polaren und einem unpolaren flüssigen Medium kombiniert werden.

Die erfindungsgemäße Biozidzusammensetzung kann zusätzlich einen oder mehrere weitere biozide Wirkstoffe enthalten, die in Abhängigkeit vom Anwendungsgebiet ausgewählt werden. Spezielle Beispiele für solche zusätzliche bioziden Wirkstoffe sind nachfolgend angegeben.

Benzylalkohol
2,4-Dichlorbenzylalkohol
2-Phenoxyethanol
2-Phenoxyethanolhemiformal
Phenylethylalkohol
5-Brom-5-nitro-1,3-dioxan
Formaldehyd und Formaldehyd-Depotstoffe
Dimethyloldimethylhydantoin
Glyoxal
Glutardialdehyd
Sorbinsäure
Benzoesäure
Salicylsäure
p-Hydroxybenzoesäureester
Chloracetamid
N-Methylolchloracetamid
Phenole, wie p-Chlor-m-kresol und o-Phenylphenol
N-Methylolharnstoff
N,N'-Dimethylolharnstoff
Benzylformal
4,4-Dimethyl-1,3-oxazolidin
1,3,5-Hexahydrotriazin
Quartäre Ammoniumverbindungen, wie

N-Alkyl-N,N-dimethylbenzylammoniumchlorid und
Di-n-decyldimethylammoniumchlord

Cetylpyridiniumchlorid
Diguanidin
Polybiguanid
Chlorhexidin
1,2-Dibrom-2,4-dicyanobutan
3,5-Dichlor-4-hydroxybenzaldehyd
Ethylenglykolhemiformal
Tetra-(hydroxymethyl)-phosphoniumsalze
Dichlorophen
2,2-Dibrom-3-nitrilopropionsäureamid
Methyl-N-benzimidazol-2-ylcarbamat
2-n-Octylisothiazolin-3-on
4,5-Dichlor-2-n-octylisothiazolin-3-on
4,5-Trimethylen-2-methylisothiazolin-3-on
2,2'-Dithio-dibenzoesäure-di-N-methylamid
Benzisothiazolinonderivate
2-Thiocyanomethylthiobenzthiazol
C-Formale, wie

2-Hydroxymethyl-2-nitro-1,3-propandiol
2-Brom-2-nitropropan-1,3-diol

Umsetzungsprodukte von Allantoin

Beispiele für den Formaldehyd-Depotstoff sind

N-Formale, wie

N,N'-Dimethylolharnstoff
N-Methylolharnstoff
Dimethyloldimethylhydantoin
N-Methylolchloracetamid
Umsetzungsprodukte von Allantoin

Glykolformale, wie
Ethylenglykolformal
Butyldiglykolformal
Benzylformal

Die erfindungsgemäße Biozidzusammensetzung kann weitere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung des pH-Werts, Duftstoffe, Dispergierhilfsmittel und färbende Stoffe.

Das 2-Methylisothiazolin-3-on und das 3-Iod-2-propinyl-N-butylcarbamat sind bekannte Stoffe. Das 2-Methylisothiazolin-3-on kann beispielsweise gemäß der US 5466818 hergestellt werden. Das dabei erhaltene Reaktionsprodukt läßt sich z.B. durch Säulenchromatographie reinigen. werden. Das dabei erhaltene Reaktionsprodukt läßt sich z.B. durch Säulenchromatographie reinigen.

Das 3-Iod-2-propinyl-N-butylcarbamat ist im Handel erhältlich, beispielsweise von der Fa. Troy Chemical Company unter den Handelsnamen Polyphase®, Polyphase® AF-1 und Polyphase® NP-1, oder von der Firma Olin Corporation unter dem Handelsnamen Omacide® IPBC 100.

Bei der erfindungsgemäßen Biozidzusammensetzung handelt es sich um ein System, bei dem die Kombination aus 2-Methylisothiazolin-3-on und 3-Iod-2-propinyl-N-butylcarbamat synergistisch eine biozide Wirkung entfaltet, die größer ist als jene, die jede dieser Verbindungen allein aufweist.

Die erfindungsgemäße Biozidzusammensetzung kann auf sehr unterschiedlichen Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

Bei der praktischen Anwendung kann die Biozidzusammensetzung entweder als fertiges Gemisch oder durch getrennte Zugabe der Biozide und der übrigen Komponenten der Zusammensetzung in den zu konservierenden Stoff eingebracht werden.

Die Beispiele erläutern die Erfindung.

Beispiel 1

Mit diesem Beispiel wird der Synergismus von Kombinationen aus 2-Methylisothiazolin-3-on und 3-Iod-2-propinyl-N-butylcarbamat in der erfindungsgemäßen Biozidzusammensetzung aufgezeigt.

Dazu wurden wäßrige Gemische mit unterschiedlichen Konzentrationen an 2-Methylisothiazolin-3-on (MIT) und 3-Iod-2-propinyl-N-butylcarbamat (IPBC) hergestellt und es wurde die Wirkung dieser Gemische auf Saccharomyces cerevisiae geprüft.

Die wäßrigen Gemische enthielten außer der Biozidkomponente und Wasser noch ein Nährmedium, nämlich eine Sabouraud-Maltose-Bouillon (Handelsprodukt "Merck Nr. 10393"). Die Zelldichte von Saccharomyces cerevisiae lag bei $10^6$ Keime/ml. Die Inkubationszeit betrug 72 h bei 25 °C. Jede Probe wurde mit 120 U/min auf einem Inkubationsschüttler bebrütet.

In der nachfolgenden Tabelle I sind die verwendeten Konzentrationen von MIT und IPBC angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von MIT allein ein MHK-Wert von 150 ppm und beim Einsatz von IPBC allein ein MHK-Wert von 10 ppm. Dagegen sind die MHK-Werte von Gemischen aus MIT und IPBC deutlich niedriger, das heißt MIT und IPBC wirken in ihrer Kombination synergistisch.

Tabelle I

| MHK-Werte bezüglich Saccharomyces cerevisiae bei einer Inkubationszeit von 72 h | | | | | | | | | | | |
|---|---|---|---|---|---|---|---|---|---|---|---|
| Konzentration MIT (ppm) | Konzentration IPBC (ppm) | | | | | | | | | | |
| | 15 | 12,5 | 10 | 7,5 | 5 | 4 | 3 | 2 | 1 | 0,5 | 0 |
| 300 | - | - | - | - | - | - | - | - | - | - | - |
| 250 | - | - | - | - | - | - | - | - | - | - | - |
| 200 | - | - | - | - | - | - | - | - | - | - | - |
| 150 | - | - | - | - | - | - | - | - | - | - | - |
| 100 | - | - | - | - | - | - | - | + | + | + | + |
| 75 | - | - | - | - | - | - | + | + | + | + | + |
| 50 | - | - | - | - | - | + | + | + | + | + | + |
| 25 | - | - | - | - | - | + | + | + | + | + | + |
| 15 | - | - | - | - | + | + | + | + | + | + | + |
| 10 | - | - | - | - | + | + | + | + | + | + | + |
| 5 | - | - | - | - | + | + | + | + | + | + | + |
| 0 | - | - | - | + | + | + | + | + | + | + | + |

Der auftretende Synergismus wird mittels der in der Tabelle II angegebenen Berechnung des Synergieindex zahlenmäßig dargestellt. Die Berechnung des Synergieindex erfolgt nach der Methode von F.C. Kull et al., Applied Microbiology, Bd. 9 (1961), S. 538. Hier wird der Synergieindex mit der folgenden Formel berechnet:

$$\text{Synergieindex } SI = Q_a/Q_A + Q_b/Q_B.$$

Bei der Anwendung dieser Formel auf das hier geprüfte Biozidsystem haben die Größen in der Formel folgende Bedeutung:

$Q_a$ =　Konzentration von MIT im Biozidgemisch aus MIT und IPBC

$Q_A$ =　Konzentration von MIT als einziges Biozid

$Q_b$ =　Konzentration von IPBC im Biozidgemisch aus MIT und IPBC

$Q_B$ =　Konzentration von IPBC als einziges Biozid

Wenn der Synergieindex einen Wert von über 1 aufweist, bedeutet dies, daß ein Antagonismus vorliegt. Wenn der Synergieindex den Wert 1 annimmt, bedeutet dies, daß eine Addition der Wirkung der beiden Biozide gegeben ist. Wenn der Synergieindex einen Wert von unter 1 annimmt, bedeutet dies, daß ein Synergismus der beiden Biozide besteht.

Tabelle II

| Berechnung des Synergieindex bezüglich Saccharomyces cerevisiae bei einer Inkubationszeit von 72 h | | | | | | | |
| MHK bei | | Gesamtkonzentration MIT + IPBC | Konzentration | | $Q_a/Q_A$ | $Q_b/Q_B$ | Synergieindex |
| MIT-Konzentration | IPBC-Konzentration | | MIT | IPBC | | | |
| $Q_a$ (ppm) | $Q_b$ (ppm) | $Q_a + Q_b$ (ppm) | (Gew%) | (Gew%) | | | $Q_a/Q_A + Q_b/Q_B$ |
| 0 | 10 | 10 | 0,0 | 100,0 | 0,00 | 1,00 | 1,00 |
| 5 | 7,5 | 12,5 | 40,0 | 60,0 | 0,03 | 0,75 | 0,78 |
| 10 | 7,5 | 17,5 | 57,1 | 42,9 | 0,07 | 0,75 | 0,82 |
| 25 | 5 | 30 | 83,3 | 16,7 | 0,17 | 0,50 | 0,67 |
| 50 | 5 | 55 | 90,9 | 9,1 | 0,33 | 0,50 | 0,83 |
| 75 | 4 | 79 | 94,9 | 5,1 | 0,50 | 0,40 | 0,90 |
| 100 | 2 | 102 | 98,0 | 2,0 | 0,67 | 0,20 | 0,87 |
| 150 | 0 | 150 | 100,0 | 0,0 | 1,00 | 0,00 | 1,00 |

Aus der Tabelle II ist ersichtlich, daß der optimale Synergismus, d.h. der niedrigste Synergieindex (0,67) eines MIT/IPBC-Gemisches, bei einem Gemisch aus 83.3 Gew% MIT und 16.7 Gew% IPBC liegt.

Beispiel 2

Beispiel 1 wurde wiederholt mit der Änderung, daß die Inkubationszeit statt 72 h nun 96 h betrug.

Aus der nachfolgenden Tabelle III sind die MHK-Werte der geprüften Biozidzusammensetzungen ersichtlich. Der MHK-Wert beim Einsatz von MIT allein betrug 150 ppm und beim Einsatz von IPBC allein 10 ppm.

Tabelle III

| MHK-Werte bezüglich Saccharomyces cerevisiae bei einer Inkubationszeit von 96 h | | | | | | | | | | |
|---|---|---|---|---|---|---|---|---|---|---|
| Konzentration MIT (ppm) | Konzentration IPBC (ppm) | | | | | | | | | |
| | 15 | 12,5 | 10 | 7,5 | 5 | 4 | 3 | 2 | 1 | 0,5 | 0 |
| 300 | - | - | - | - | - | - | - | - | - | - | - |
| 250 | - | - | - | - | - | - | - | - | - | - | - |
| 200 | - | - | - | - | - | - | - | - | - | - | - |
| 150 | - | - | - | - | - | - | - | - | - | - | - |
| 100 | - | - | - | - | - | - | - | - | + | + | + |
| 75 | - | - | - | - | - | - | + | + | + | + | + |
| 50 | - | - | - | - | - | + | + | + | + | + | + |
| 25 | - | - | - | - | - | + | + | + | + | + | + |
| 15 | - | - | - | - | + | + | + | + | + | + | + |
| 10 | - | - | - | - | + | + | + | + | + | + | + |
| 5 | - | - | - | - | + | + | + | + | + | + | + |
| 0 | - | - | - | + | + | + | + | + | + | + | + |

Bei gleichzeitigem Einsatz von MIT und IPBC trat ein Synergismus ein. Die Berechnung des Synergieindex ergibt sich aus der Tabelle IV. Hiernach lag bei Saccharomyces cerevisiae der niedrigste Synergieindex (0,67) bei einem Gemisch aus 83,3 Gew% MIT und 16,7 Gew% IPBC.

Tabelle IV

| Berechnung des Synergieindex bezüglich Saccharomyces cerevisiae bei einer Inkubationszeit von 96 h | | | | | | | |
|---|---|---|---|---|---|---|---|
| MHK bei | | Gesamtkonzentration MIT + IPBC | Konzentration | | $Q_a/Q_A$ | $Q_b/Q_B$ | Synergieindex |
| MIT-Konzentration | IPBC-Konzentration | | MIT | IPBC | | | |
| $Q_a$ (ppm) | $Q_b$ (ppm) | $Q_a + Q_b$ (ppm) | (Gew%) | (Gew%) | | | $Q_a/Q_A + Q_b/Q_B$ |
| 0 | 10 | 10 | 0,0 | 100,0 | 0,00 | 1,00 | 1,00 |
| 5 | 7,5 | 12,5 | 40,0 | 60,0 | 0,03 | 0,75 | 0,78 |
| 10 | 7,5 | 17,5 | 57,1 | 42,9 | 0,07 | 0,75 | 0,82 |
| 25 | 5 | 30 | 83,3 | 16,7 | 0,17 | 0,50 | 0,67 |
| 50 | 5 | 55 | 90,9 | 9,1 | 0,33 | 0,50 | 0,83 |
| 75 | 4 | 79 | 94,9 | 5,1 | 0,50 | 0,40 | 0,90 |
| 100 | 2 | 102 | 98,0 | 2,0 | 0,67 | 0,20 | 0,87 |
| 150 | 0 | 150 | 100,0 | 0,0 | 1,00 | 0,00 | 1,00 |

Beispiel 3

Ähnlich wie im Beispiel 1 wird der Synergismus von MIT und IPBC gegenüber dem Mikroorganismus Candida valida aufgezeigt.

Die Versuchsansätze enthielten wieder eine Sabouraud-Maltose-Bouillon als Nährmedium. Die Zelldichte lag bei $10^6$ Keime/ml. Die Inkubationszeit betrug 96 h bei 25 °C. Jede Probe wurde mit 120 U/min auf einem Inkubationsschüttler bebrütet.

Aus der nachfolgenden Tabelle V sind die MHK-Werte der geprüften Biozidzusammensetzungen ersichtlich. Der MHK-Wert beim Einsatz von MIT allein betrug 75 ppm und beim Einsatz von IPBC allein 2,5 ppm.

Tabelle V

| MHK-Werte bezüglich Candida valida bei einer Inkubationszeit von 96 h | | | | | | | | | | | |
|---|---|---|---|---|---|---|---|---|---|---|---|
| Konzentration MIT (ppm) | Konzentration IPBC (ppm) | | | | | | | | | | |
| | 7,5 | 5 | 2,5 | 2 | 1,5 | 1,25 | 1 | 0,75 | 0,5 | 0,25 | 0 |
| 300 | - | - | - | - | - | - | - | - | - | - | - |
| 250 | - | - | - | - | - | - | - | - | - | - | - |
| 200 | - | - | - | - | - | - | - | - | - | - | - |
| 150 | - | - | - | - | - | - | - | - | - | - | - |
| 100 | - | - | - | - | - | - | - | - | - | - | - |
| 75 | - | - | - | - | - | - | - | - | - | - | - |
| 50 | - | - | - | - | - | - | - | + | + | + | + |
| 25 | - | - | - | - | - | - | - | + | + | + | + |
| 15 | - | - | - | - | - | + | + | + | + | + | + |
| 10 | - | - | - | - | - | + | + | + | + | + | + |
| 5 | - | - | - | + | + | + | + | + | + | + | + |
| 0 | - | - | - | + | + | + | + | + | + | + | + |

Bei gleichzeitigem Einsatz von MIT und IPBC trat ein Synergismus ein. Die Berechnung des Synergieindex ergibt sich aus der Tabelle VI. Hiernach lag bei Candida valida der niedrigste Synergieindex (0,73) bei einem Gemisch aus 87,0 Gew% MIT und 13 Gew% IPBC sowie auch bei einem Gemisch aus 96,2 Gew% MIT und 3,8 Gew% IPBC.

Tabelle VI

| Berechnung des Synergismus bezüglich Candida valida bei einer Inkubationszeit von 96 h | | | | | | | |
|---|---|---|---|---|---|---|---|
| MHK bei | | Gesamtkonzentration MIT + IPBC | Konzentration | | $Q_a/Q_A$ | $Q_b/Q_B$ | Synergieindex |
| MIT-Konzentration | IPBC-Konzentration | | MIT | IPBC | | | |
| $Q_a$ (ppm) | $Q_b$ (ppm) | $Q_a + Q_b$ (ppm) | (Gew%) | (Gew%) | | | $Q_a/Q_A + Q_b/Q_B$ |
| 0 | 2,5 | 2,5 | 0,0 | 100,0 | 0,00 | 1,00 | 1,00 |
| 10 | 2 | 12 | 83,3 | 16,7 | 0,13 | 0,80 | 0,93 |
| 10 | 1,5 | 11,5 | 87,0 | 13,0 | 0,13 | 0,60 | 0,73 |
| 15 | 1,5 | 16,5 | 90,9 | 9,1 | 0,20 | 0,60 | 0,80 |
| 25 | 1,5 | 26,5 | 94,3 | 5,7 | 0,33 | 0,60 | 0,93 |
| 25 | 1,25 | 26,25 | 95,2 | 4,8 | 0,33 | 0,50 | 0,83 |
| 25 | 1 | 26 | 96,2 | 3,8 | 0,33 | 0,40 | 0,73 |
| 75 | 0 | 75 | 100,0 | 0,0 | 1,00 | 0,00 | 1,00 |

Beispiel 4

Ähnlich wie im Beispiel 1 wird der Synergismus der beiden Wirkstoffe MIT und IPBC gegenüber dem Mikroorganismus Aspergillus niger aufgezeigt.

Die Versuchsansätze enthielten wieder eine Sabouraud-Maltose-Bouillon als Nährmedium. Die Zelldichte lag bei $10^6$ Keime/ml. Die Inkubationszeit betrug 96 h bei 25 °C. Jede Probe wurde mit 120 U/min auf einem Inkubationsschüttler bebrütet.

Aus der nachfolgenden Tabelle VII sind die MHK-Werte der geprüften Biozidzusammensetzungen ersichtlich. Der MHK-Wert beim Einsatz von MIT allein betrug 750 ppm und beim Einsatz von IPBC allein 5 ppm.

Tabelle VII

| MHK-Werte bezüglich Aspergillus niger bei einer Inkubationszeit von 96 h | | | | | | | | | | | |
|---|---|---|---|---|---|---|---|---|---|---|---|
| Konzentration MIT (ppm) | Konzentration IPBC (ppm) | | | | | | | | | | |
| | 5 | 2,5 | 2 | 1,5 | 1,25 | 1 | 0,75 | 0,5 | 0,25 | 0,1 | 0 |
| 750 | - | - | - | - | - | - | - | - | - | - | - |
| 500 | - | - | - | - | - | - | + | + | + | + | + |
| 250 | - | - | - | + | + | + | + | + | + | + | + |
| 100 | - | - | + | + | + | + | + | + | + | + | + |
| 50 | - | + | + | + | + | + | + | + | + | + | + |
| 40 | - | + | + | + | + | + | + | + | + | + | + |
| 30 | - | + | + | + | + | + | + | + | + | + | + |
| 20 | - | + | + | + | + | + | + | + | + | + | + |
| 15 | - | + | + | + | + | + | + | + | + | + | + |
| 10 | - | + | + | + | + | + | + | + | + | + | + |
| 7,5 | - | + | + | + | + | + | + | + | + | + | + |
| 5 | - | + | + | + | + | + | + | + | + | + | + |
| 0 | - | + | + | + | + | + | + | + | + | + | + |

Bei gleichzeitigem Einsatz von MIT und IPBC trat ein Synergismus ein. Die Berechnung des Synergieindex ergibt sich aus der Tabelle VIII. Hiernach lag bei Aspergillus niger der niedrigste Synergieindex (0,63) bei einem Gemisch aus 97,6 Gew% MIT und 2,4 Gew% IPBC.

Tabelle VIII

| Berechnung des Synergieindex bezüglich Aspergillus niger bei einer Inkubationszeit von 96 h | | | | | | | |
|---|---|---|---|---|---|---|---|
| MHK bei | | Gesamtkonzentration MIT + IPBC | Konzentration | | $Q_a/Q_A$ | $Q_b/Q_B$ | Synergie-index |
| MIT-Konzentration | IPBC-Konzentration | | MIT | IPBC | | | |
| $Q_a$ (ppm) | $Q_b$ (ppm) | $Q_a + Q_b$ (ppm) | (Gew%) | (Gew%) | | | $Q_a/Q_A + Q_b/Q_B$ |
| 0 | 5 | 5 | 0,0 | 100,0 | 0,00 | 1,00 | 1,00 |
| 100 | 2,5 | 102,5 | 97,6 | 2,4 | 0,13 | 0,50 | 0,63 |
| 250 | 2,5 | 252,5 | 99,0 | 1,0 | 0,33 | 0,50 | 0,83 |
| 250 | 2 | 252 | 99,2 | 0,8 | 0,33 | 0,40 | 0,73 |
| 500 | 1,5 | 501,5 | 99,7 | 0,3 | 0,67 | 0,30 | 0,97 |
| 500 | 1,25 | 501,25 | 99,8 | 0,2 | 0,67 | 0,25 | 0,92 |
| 500 | 1 | 501 | 99,8 | 0,2 | 0,67 | 0,20 | 0,87 |
| 750 | 0 | 750 | 100,0 | 0,0 | 1,00 | 0,00 | 1,00 |

Beispiel 5

Ähnlich wie im Beispiel 1 wird der Synergismus der beiden Wirkstoffe MIT und IPBC gegenüber dem Mikroorganismus Penicillium funiculosum aufgezeigt.

Die Versuchsansätze enthielten wieder eine Sabouraud-Maltose-Bouillon als Nährmedium. Die Zelldichte lag bei $10^6$ Keime/ml. Die Inkubationszeit betrug 72 h bei 25°C. Jede Probe wurde mit 120 U/min auf einem Inkubationsschüttler bebrütet.

Aus der nachfolgenden Tabelle IX sind die MHK-Werte der geprüften Biozidzusammensetzungen ersichtlich. Der MHK-Wert beim Einsatz von MIT allein betrug 200 ppm und beim Einsatz von IPBC allein 1,5 ppm.

Tabelle IX

| MHK-Werte bezüglich Penicillium funiculosum bei einer Inkubationszeit von 72 h | | | | | | | | | | | |
|---|---|---|---|---|---|---|---|---|---|---|---|
| Konzentration MIT (ppm) | Konzentration IPBC (ppm) | | | | | | | | | | |
| | 5 | 2,5 | 2 | 1,5 | 1,25 | 1 | 0,75 | 0,5 | 0,25 | 0,1 | 0 |
| 200 | - | - | - | - | - | - | - | - | - | - | - |
| 150 | - | - | - | - | - | - | - | - | - | + | + |
| 100 | - | - | - | - | - | - | - | - | + | + | + |
| 75 | - | - | - | - | - | - | - | - | + | + | + |
| 50 | - | - | - | - | - | - | + | + | + | + | + |
| 40 | - | - | - | - | - | - | + | + | + | + | + |
| 30 | - | - | - | - | - | - | + | + | + | + | + |
| 20 | - | - | - | - | - | + | + | + | + | + | + |
| 15 | - | - | - | - | - | + | + | + | + | + | + |
| 10 | - | - | - | - | - | + | + | + | + | + | + |
| 5 | - | - | - | - | + | + | + | + | + | + | + |
| 0 | - | - | - | - | + | + | + | + | + | + | + |

Bei gleichzeitigem Einsatz von MIT und IPBC trat ein Synergismus ein. Die Berechnung des Synergieindex ergibt sich aus der Tabelle X. Hiernach lag bei Penicillium funiculosum der niedrigste Synergieindex (0,71) bei einem Gemisch aus 99,3 Gew% MIT und 0,7 Gew% IPBC.

Tabelle X

| Berechnung des Synergieindex bezüglich Penicillium funiculosum bei einer Inkubationszeit von 72 h | | | | | | | |
|---|---|---|---|---|---|---|---|
| MHK bei | | Gesamtkonzentration MIT + IPBC | Konzentration | | $Q_a/Q_A$ | $Q_b/Q_B$ | Synergie-index |
| MIT-Konzentration | IPBC-Konzentration | | MIT | IPBC | | | |
| $Q_a$ (ppm) | $Q_b$ (ppm) | $Q_a + Q_b$ (ppm) | (Gew%) | (Gew%) | | | $Q_a/Q_A + Q_b/Q_B$ |
| 0 | 1,5 | 1,5 | 0,0 | 100,0 | 0,00 | 1,00 | 1,00 |
| 10 | 1,25 | 11,25 | 88,9 | 11,1 | 0,05 | 0,83 | 0,88 |
| 15 | 1,25 | 16,25 | 92,3 | 7,7 | 0,08 | 0,83 | 0,91 |
| 20 | 1,25 | 21,25 | 94,1 | 5,9 | 0,10 | 0,83 | 0,93 |
| 30 | 1 | 31 | 96,8 | 3,2 | 0,15 | 0,67 | 0,82 |
| 40 | 1 | 41 | 97,6 | 2,4 | 0,20 | 0,67 | 0,87 |
| 50 | 1 | 51 | 98,0 | 2,0 | 0,25 | 0,67 | 0,92 |
| 75 | 0,75 | 75,75 | 99,0 | 1,0 | 0,38 | 0,50 | 0,88 |
| 75 | 0,5 | 75,5 | 99,3 | 0,7 | 0,38 | 0,33 | 0,71 |
| 150 | 0,25 | 150,25 | 99,8 | 0,2 | 0,75 | 0,17 | 0,92 |
| 200 | 0 | 200 | 100,0 | 0,0 | 1,00 | 0,00 | 1,00 |

Beispiel 6

Beispiel 5 wurde wiederholt mit der Änderung, daß die Inkubationszeit statt 72 h nun 96 h betrug.

Aus der nachfolgenden Tabelle XI sind die MHK-Werte der geprüften Biozidzusammensetzungen ersichtlich. Der MHK-Wert beim Einsatz von MIT allein betrug 200 ppm und beim Einsatz von IPBC allein 1,5 ppm.

Tabelle XI

| MHK-Werte bezüglich Penicillium funiculosum bei einer Inkubationszeit von 96 h | | | | | | | | | | | |
|---|---|---|---|---|---|---|---|---|---|---|---|
| Konzentration MIT (ppm) | Konzentration IPBC (ppm) | | | | | | | | | | |
| | 5 | 2,5 | 2 | 1,5 | 1,25 | 1 | 0,75 | 0,5 | 0,25 | 0,1 | 0 |
| 200 | - | - | - | - | - | - | - | - | - | - | - |
| 150 | - | - | - | - | - | - | - | - | - | + | + |
| 100 | - | - | - | - | - | - | - | - | + | + | + |
| 75 | - | - | - | - | - | - | - | - | + | + | + |
| 50 | - | - | - | - | - | - | + | + | + | + | + |
| 40 | - | - | - | - | - | - | + | + | + | + | + |
| 30 | - | - | - | - | + | + | + | + | + | + | + |
| 20 | - | - | - | - | + | + | + | + | + | + | + |
| 15 | - | - | - | - | + | + | + | + | + | + | + |
| 10 | - | - | - | - | + | + | + | + | + | + | + |
| 5 | - | - | - | - | + | + | + | + | + | + | + |
| 0 | - | - | - | - | + | + | + | + | + | + | + |

Beim gleichzeitigen Einsatz von MIT und IPBC trat ein Synergismus ein. Die Berechnung des Synergieindex ergibt sich aus der Tabelle XII. Hiernach lag bei Penicillium funiculosum der niedrigste Synergieindex (0,71) bei einem Gemisch aus 99,3 Gew% MIT und 0,7 Gew% IPBC.

Tabelle XII

| Berechnung des Synergieindex bezüglich Penicillium funiculosum bei einer Inkubationszeit von 96 h | | | | | | | |
|---|---|---|---|---|---|---|---|
| MHK bei | | Gesamtkonzentration MIT + IPBC | Konzentration | | $Q_a/Q_A$ | $Q_b/Q_B$ | Synergie-index |
| MIT-Konzentration | IPBC-Konzentration | | MIT | IPBC | | | |
| $Q_a$ (ppm) | $Q_b$ (ppm) | $Q_a + Q_b$ (ppm) | (Gew%) | (Gew%) | | | $Q_a/Q_A + Q_b/Q_B$ |
| 0 | 1,5 | 1,5 | 0,0 | 100,0 | 0,00 | 1,00 | 1,00 |
| 40 | 1 | 41 | 97,6 | 2,4 | 0,20 | 0,67 | 0,87 |
| 50 | 1 | 51 | 98,0 | 2,0 | 0,25 | 0,67 | 0,92 |
| 75 | 0,75 | 75,75 | 99,0 | 1,0 | 0,38 | 0,50 | 0,88 |
| 75 | 0,5 | 75,5 | 99,3 | 0,7 | 0,38 | 0,33 | 0,71 |
| 150 | 0,25 | 150,25 | 99,8 | 0,2 | 0,75 | 0,17 | 0,92 |
| 200 | 0 | 200 | 100,0 | 0,0 | 1,00 | 0,00 | 1,00 |

**Patentansprüche**

1. Biozidzusammensetzung als Zusatz zu Stoffen, die von schädlichen Mikroorganismen befallen werden können, mit einem Gehalt an 2-Methylisothiazolin-3-on als biozidem Wirkstoff, **dadurch gekennzeichnet, daß** die Biozidzusammensetzung als einen weiteren bioziden Wirkstoff 3-Iod-2-propinyl-N-butylcarbamat enthält, ausgenommen Biozidzusammensetzungen mit einem Gehalt an 5-Chlor-2-methylisothiazolin-3-on.

2. Biozidzusammensetzung nach Anspruch 1, **dadurch gekennzeichnet, daß** sie 2-Methylisothiazolin-3-on und 3-Iod-2-propinyl-N-butylcarbamat im Gewichtsverhältnis von (100-1):(1-50) enthält.

3. Biozidzusammensetzung nach Anspruch 2, **dadurch gekennzeichnet, daß** sie 2-Methylisothiazolin-3-on und 3-Iod-2-propinyl-N-butylcarbamat im Gewichtsverhältnis von (15-1):(1-8) enthält.

4. Biozidzusammensetzung nach einem der Ansprüche 1 bis 3, **dadurch gekennzeichnet, daß** sie 2-Methylisothiazolin-3-on und 3-Iod-2-propinyl-N-butylcarbamat in einer Gesamtkonzentration von 1 bis 20 Gew%, bezogen auf die gesamte Biozidzusammensetzung, enthält.

5. Biozidzusammensetzung nach einem der Ansprüche 1 bis 4, **dadurch gekennzeichnet, daß** sie ein polares und/ oder ein unpolares flüssiges Medium enthält.

6. Biozidzusammensetzung nach Anspruch 5, **dadurch gekennzeichnet, daß** sie als polares flüssiges Medium Wasser, einen aliphatischen Alkohol mit 1 bis 4 Kohlenstoffatomen, ein Glykol, einen Glykolether, einen Glykolester, ein Polyethylenglykol, ein Polypropylenglykol, N,N-Dimethylformamid, 2,2,4-Trimethylpentandiolmonoisobutyrat oder ein Gemisch aus solchen Stoffen enthält.

7. Biozidzusammensetzung nach Anspruch 6, **dadurch gekennzeichnet, daß** das polare flüssige Medium Wasser ist und die Zusammensetzung einen pH-Wert von 6 bis 8 aufweist.

8. Verwendung einer Biozidzusammensetzung nach einem der Ansprüche 1 bis 7 zur Bekämpfung von schädlichen Mikroorganismen.

**Claims**

1. Biocide composition as an additive to materials, which can be attacked by damaging micro-organisms, with a content of 2-methylisothiazolin-3-one as biocidal active agent, **characterised in that** the biocide composition contains as a further biocidal active agent 3-iodo-2-propinyl-N-butylcarbamate, with the exception of biocide compositions with a content of 5-chloro-2-methylisothiazolin-3-one.

2. Biocide composition according to Claim 1, **characterised in that** it contains 2-methylisothiazolin-3-one and 3-iodo-2-propinyl-N-butylcarbamate in a weight ratio of (100-1):(1-50).

3. Biocide composition according to Claim 1, **characterised in that** it contains 2-methylisothiazolin-3-one and 3-iodo-2-propinyl-N-butylcarbamate in a weight ratio of (15-1):(1-8).

4. Biocide composition according to one of Claims 1 to 3, **characterised in that** it contains 2-methylisothiazolin-3-one and 3-iodo-2-propinyl-N-butylcarbamate in a total concentration of 1 to 20 wt%, taken on the entire biocide composition.

5. Biocide composition according to one of Claims 1 to 4, **characterised in that** it contains a polar and/or a non-polar liquid medium.

6. Biocide composition according to Claim 1, **characterised in that** it contains as polar liquid medium water, an aliphatic alcohol with 1 to 4 carbon atoms, a glycol, a glycol ether, a glycol ester, a polyethylene glycol, a polypropylene glycol, N,N-dimethylformamide, 2,2,4-trimethylpentanediol monoisobutyrate or a mixture of such materials.

7. Biocide composition according to Claim 6, **characterised in that** the . polar liquid medium is water, and the composition has a pH value of 6 to 8.

8. The use of a biocide composition according to one of Claims 1 to 7 for combatting damaging microorganisms.

**Revendications**

1. Composition biocide en tant qu'additif de substances, qui peuvent être infestées de micro-organismes nuisibles, avec une teneur en 2-méthylisothiazolin-3-one en tant que substance active biocide, **caractérisée en ce que** la composition biocide contient comme une autre substance active biocide le N-butylcarbamate de 3-iodo-2-propynyle, exception faite des compositions biocides avec une teneur en 5-chloro-2-méthylisothiazolin-3-one.

2. Composition biocide selon la revendication 1, **caractérisée en ce qu'**elle contient la 2-méthylisothiazolin-3-one et le N-butylcarbamate de 3-iodo-2-propynyle en proportion en poids de (100-1) : (1-50).

3. Composition biocide selon la revendication 2, **caractérisée en ce qu'**elle contient la 2-méthylisothiazolin-3-one et le N-butylcarbamate de 3-iodo-2-propynyle en proportion en poids de (15-1) : (1-8).

4. Composition biocide selon l'une des revendications 1 à 3, **caractérisée en ce qu'**elle contient la 2-méthylisothiazolin-3-one et le N-butylcarbamate de 3-iodo-2-propynyle dans une concentration totale de 1 à 20 % en poids par rapport à la composition biocide totale.

5. Composition biocide selon l'une des revendications 1 à 4, **caractérisée en ce qu'**elle contient un milieu liquide polaire et/ou un milieu liquide non polaire.

6. Composition biocide selon la revendication 5, **caractérisée en ce qu'**elle contient en tant que milieu polaire liquide l'eau, un alcool aliphatique présentant 1 à 4 atomes de carbone, un glycol, un éther de glycol, un ester de glycol, un polyéthylèneglycol, un polypropylèneglycol, le N,N-diméthylformamide, le monoisobutyrate de 2,2,4-triméthylpenetandiol ou un mélange de telles substances.

7. Composition biocide selon la revendication 6, **caractérisée en ce que** le milieu polaire liquide est l'eau et la composition présente une valeur du pH de 6 à 8.

8. Utilisation d'une composition biocide selon l'une des revendications 1 à 7 pour la lutte contre les micro-organismes nuisibles.